# FASCICULE DE BREVET EUROPEEN

(11) **EP 3 583 060 B1**
(45) Date de publication et mention de la délivrance du brevet: **27.05.2020**
(21) Numéro de dépôt: 18704275.9
(22) Date de dépôt: 19.01.2018
(51) Int. Cl.: B29D 30/00, B29D 30/46, B29C 48/00, B29C 48/28, B65H 19/14, B65H 19/22, B65H 19/24, B65H 20/30, B65H 20/32, B65H 20/34

(54) **PROCEDE ET INSTALLATION D'ENROULAGE EN CONTINU DE BANDELETTES DE GOMME POUR FORMER DES GALETTES**
VERFAHREN UND ANLAGE ZUM KONTINUIERLICHEN QUERWICKELN VON GUMMISTREIFEN ZUR FORMUNG VON SCHEIBEN
METHOD AND FACILITY FOR CONTINUOUSLY CROSSWINDING GUM STRIPS TO FORM DISCS

(30) Priorité: 14.02.2017 FR 1751173
(43) Date de publication de la demande: 25.12.2019
(73) Titulaire: Spoolex, 42230 Roche La Moliere (FR)
(72) Inventeur: LASSALLE, Luc, 42100 Saint-Etienne (FR); PAULET, Guillaume, 43240 Saint Just Malmont (FR); MONTUSCLAT, Christian, 07100 Roiffieux (FR)
(74) Mandataire: Cabinet Laurent & Charras
(86) Numéro de dépôt international: PCT/FR2018/050139
(87) Numéro de publication internationale: WO 2018/150114

(56) Documents cités:
- EP-A1- 0 621 124
- EP-A2- 1 095 892
- JP-A- H01 295 836
- JP-A- S58 122 846
- JP-A- 2014 073 589
- US-A- 2 718 362
- US-A1- 2009 249 597

## Description

### DOMAINE TECHNIQUE

L'invention concerne le domaine technique de la fabrication de galettes de matériau caoutchouteux, notamment de gomme, utilisées pour la fabrication d'un pneumatique par exemple.

L'invention concerne notamment un procédé et une installation d'enroulage en continu de bandelettes de gomme pour former de telles galettes, à partir d'une nappe de gomme extraite en continu d'une extrudeuse. A la différence d'un enroulage de nappes qui prend la forme d'une bobine, l'enroulage de bandelettes prend la forme de galettes, du fait de la faible largeur des bandelettes de gomme enroulées.

Par « gomme », on entend une pâte à base de caoutchouc, utilisée dans la fabrication d'un pneumatique. Cette pâte à base de caoutchouc peut intégrer un élément de renfort, tel que du tissu de la corde ou du câble, ou tout autre composant ou élément structurel.

### ETAT ANTERIEUR DE LA TECHNIQUE

Dans l'état actuel de la technique, il est connu de fabriquer une nappe de gomme par l'intermédiaire d'une extrudeuse. En sortie de l'extrudeuse, la nappe est acheminée par l'intermédiaire de rouleaux de transitique et de refroidissement vers un premier module au niveau duquel la nappe refroidie est déposée sur un film support, appelé « liner », en matière plastique ou textile, puis est en enroulée en bobine d'environ 1600 mm de largeur.

En pratique, lorsque la bobine de gomme est terminée, l'extrudeuse est stoppée, la nappe est coupée transversalement et la bobine est déchargée puis évacuée vers d'autres machines pour des opérations de déroulage de la bobine, de découpes de la nappe en bandelettes, et d'enroulage des bandelettes en galettes.

La configuration actuelle est contraignante et présente plusieurs inconvénients, notamment liés aux diverses manipulations des bobines, aux diverses opérations d'enroulage et de déroulage, au stockage et à la conservation des bobines, à la perte de rendement liée à l'arrêt de l'extrudeuse, etc...

Il est également connu les documents EP 0 621 124 et JP 2014 073589 qui divulguent des procédés d'enroulage en continu selon le préambule de la revendication 1 et des installations d'enroulage en continu selon le préambule de la revendication 5.

### EXPOSE DE L'INVENTION

L'un des buts de l'invention est donc de remédier aux problèmes précités, et de fournir un procédé et une installation d'enroulage en continu de bandelettes de gomme, notamment utilisées dans la fabrication d'un pneumatique, pour former des galettes, à partir d'une nappe de gomme extraite en continu d'une extrudeuse.
A cet effet, il a été mis au point un procédé comprenant des étapes consistant à :
- faire défiler en continu et refroidir la nappe en sortie de l'extrudeuse par l'intermédiaire de rouleaux de transitique et de refroidissement ;
- déposer en continu la nappe refroidie sur un film support déroulé en continu pour former un complexe.
Conformément à l'invention, le procédé comprend en outre des étapes consistant successivement à :
- faire défiler le complexe dans un accumulateur ;
- en sortie de l'accumulateur, découper le complexe dans sa largeur en une pluralité de bandelettes ;
- enrouler les bandelettes à une vitesse initiale, chacune autour d'un support pour former des galettes ;
- lorsque les galettes sont terminées, stopper l'enroulage des bandelettes et faire s'accumuler dans l'accumulateur le complexe en provenance de l'extrudeuse ;
- pendant que le complexe s'accumule, approvisionner des supports vides, découper transversalement les bandelettes en amont des galettes et rattacher l'extrémité libre des bandelettes auxdits supports vides ;
- simultanément, finir l'enroulage de l'extrémité libre des bandelettes autour des galettes, évacuer automatiquement lesdites galettes, et redémarrer l'enroulage de chacune des bandelettes autour des supports vides à une vitesse supérieure à la vitesse initiale jusqu'à décharger complètement l'accumulateur, puis reprendre l'enroulage à la vitesse initiale.

De cette manière, l'invention permet de fabriquer directement et en continu des galettes de gomme à partir d'une nappe en sortie d'extrudeuse. L'invention permet de s'affranchir des étapes d'enroulage, de manutention, de stockage, et de déroulage de bobines. Le rendement est optimal. L'extrudeuse produit une nappe en continu, sans arrêt, les galettes sont formées en continu.

Avantageusement, le procédé comprend une étape consistant à laisser la nappe former une boucle entre le dépôt de la nappe sur le film support et le refroidissement de la nappe par l'intermédiaire des rouleaux de transitique et de refroidissement.

De cette manière, le contrôle visuel de la hauteur de la boucle permet de contrôler aisément la vitesse du film support pour faire défiler la nappe en sortie d'extrudeuse.

Afin d'optimiser davantage le procédé selon l'invention, les galettes sont évacuées et remplacées par des supports vides, automatiquement et par l'intermédiaire d'un robot. Ces opérations sont effectuées en temps masqué sur l'enroulage des galettes en cours.

Selon une forme de réalisation particulière, lorsque les galettes sont terminées, des supports vides sont déplacés pour venir en contact avec les bandelettes en amont des galettes de manière à démarrer l'enroulement des bandelettes autour desdits supports vides, un organe d'appui est ensuite déplacé pour venir en appui contre les bandelettes entre les galettes et les supports vides, et une lame de coupe est déplacée pour couper transversalement les bandelettes, en contre-appui de l'organe d'appui, les supports vides sont entrainés en rotation pour l'enroulage des bandelettes et la formation de nouvelles galettes.

De cette manière, la formation des nouvelles galettes débute sensiblement en même temps que la découpe et l'évacuation des galettes pleines. Le procédé n'est pas stoppé.

L'invention vise à protéger également une installation pour la mise en œuvre du procédé décrit ci-avant, et comprenant successivement
- un module de refroidissement comportant des rouleaux de transitique et de refroidissement pour faire défiler et refroidir la nappe en sortie d'extrudeuse ;
- un module de complexage comprenant un rouleau de dévidage d'un film support sous la nappe refroidie pour former un complexe.

Selon l'invention, comprend en outre et successivement :
- un accumulateur au travers duquel le complexe est destiné à défiler en continu en sortie du module de complexage ;
- un module de découpe comprenant des lames de coupe du complexe dans sa largeur et en une pluralité de bandelettes ;
- un module d'enroulage des bandelettes comprenant :
   - une pluralité de supports entrainés en rotation et autour desquels les bandelettes sont enroulées pour former les galettes ;
   - des capteurs détectant que les galettes sont formées, assujettis à des moyens d'évacuation des galettes formées ;
   - une lame de coupe transversale des bandelettes en amont des galettes formées ;
   - des moyens d'approvisionnement automatique de supports vides et d'enroulage des bandelettes découpées autour desdits supports vides.

Toujours selon l'invention, l'installation comprend des moyens pour assujettir la vitesse de rotation des supports pour l'enroulage des bandelettes à l'accumulateur de sorte que lorsque la rotation des supports est arrêtée ou ralentie, le complexe s'accumule dans l'accumulateur, et lorsque l'enroulage des nouvelles galettes débute, la vitesse de rotation est accélérée pour décharger l'accumulateur du complexe accumulé, puis est ralentie jusqu'à une vitesse initiale.

Selon une forme de réalisation particulière, les moyens d'approvisionnement automatique de supports vides et d'enroulage des bandelettes découpées autour desdits supports vides comprennent deux flasques entre lesquels deux barres parallèles sont reçues de manière rotative et amovible, dont une première barre sur laquelle s'enroulent des bandelettes, et une deuxième barre recevant des supports vides. Les flasques sont aptes à être entraînés en rotation pour faire basculer la deuxième barre dans une position dans laquelle les supports vides sont en contact avec les bandelettes pour l'enroulage.

Par ailleurs, le module d'enroulage comprend par exemple un organe d'appui monté pivotant pour venir en appui contre les bandelettes entre les galettes et les supports vides, et une lame de coupe transversale déplaçable pour venir couper les bandelettes en appui contre l'organe d'appui.

De préférence, le module de complexage comprend deux rouleaux de dévidage d'un film support, et un système de raboutage de l'extrémité d'un rouleau avec l'extrémité initiale de l'autre rouleau.

De cette manière, lorsqu'un rouleau de dévidage du film support est vide, le deuxième rouleau poursuit le dévidage, et le premier rouleau peut être remplacé, sans stopper le procédé.

### BREVE DESCRIPTION DES DESSINS

D'autres caractéristiques et avantages de l'invention ressortiront clairement de la description qui en est réalisée ci-après, à titre indicatif et nullement limitatif, en référence aux figures annexées dans lesquelles :
- la figure 1 est une représentation schématique illustrant, de côté, l'installation d'enroulage en continu de bandelettes de gomme selon l'invention ;
- la figure 2 est une représentation schématique similaire à celle de la figure 1, illustrant en détail le module de refroidissement et le module de complexage que comprend l'installation selon l'invention ;
- la figure 3 est une représentation schématique similaire à celle de la figure 1, illustrant en détail le module d'enroulage des bandelettes que comprend l'installation selon l'invention ;
- la figure 4 est une représentation schématique illustrant en perspective le module d'enroulage des bandelettes de l'installation selon l'invention ;
- la figure 5 est une représentation schématique similaire à celle de la figure 4, illustrant le module d'enroulage en coupe ;
- la figure 6 est une représentation schématique illustrant, dans le module d'enroulage, les moyens permettant d'enrouler les bandelettes autour des supports ;
- la figure 7 est une représentation schématique similaire à celle de la figure 6, illustrant le basculement de la barre comprenant des galettes pratiquement formées, et de la barre recevant des supports vides ;
- la figure 8 est une représentation schématique similaire à celle de la figure 7, la barre recevant les supports vides étant basculée pour mettre en contact les supports vides avec les bandelettes ;
- la figure 9 est une représentation schématique similaire à celle de la figure 8, illustrant notamment l'opération de découpe des bandelettes, en amont des galettes formées ;
- la figure 10 est une représentation schématique de détails des moyens de coupe apparaissant sur la figure 9 ;
- la figure 11 est une représentation schématique similaire à celle de la figure 10, après découpe des bandelettes, pour l'enroulage desdites bandelettes autour des nouveaux supports vides ;
- la figure 12 est une représentation schématique similaire à celle de la figure 9, les bandelettes étant dorénavant rattachées aux supports vides, les moyens de coupe étant revenus en position de repos, et les galettes formées étant prêtes à être évacuées ;
- la figure 13 est une représentation schématique similaire à celle de la figure 12, l'enroulage des bandelettes étant continué, et la barre avec les galettes formées ayant été évacuée et remplacée par une nouvelle barre recevant des supports vides.

### EXPOSE DETAILLE DE L'INVENTION

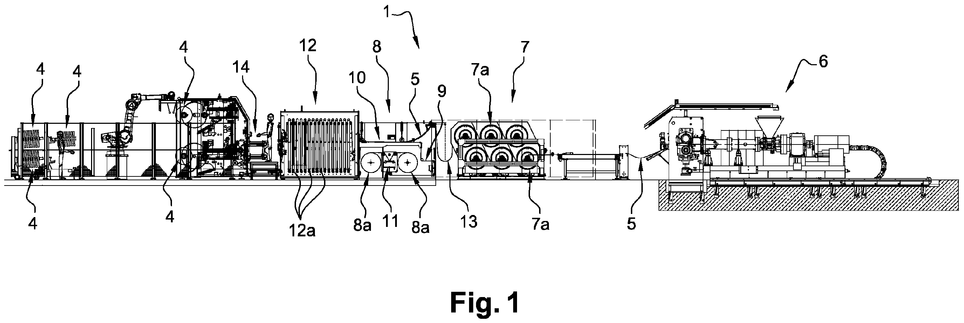

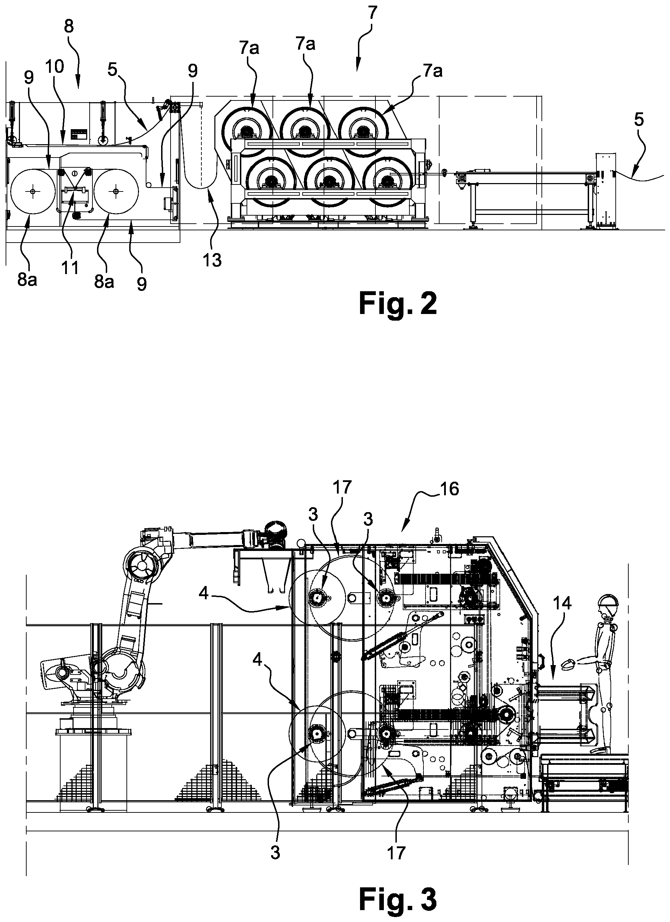

L'invention concerne un procédé et une installation (1) d'enroulage en continu de bandelettes (2) de gomme, notamment utilisées dans la fabrication d'un pneumatique. L'enroulage des bandelettes (2) est effectué autour de supports (3), notamment du type manchon ou mandrin, dont la largeur correspond à la largeur de la bandelette (2), par exemple de 10 mm à 200 mm. Les bandelettes (2) sont enroulées sur elles-mêmes de manière à former des galettes (4).
En référence aux figures 1 et 2, l'invention permet de former des galettes (4), en continu, à partir d'une nappe (5) de gomme extraite en continu d'une extrudeuse (6). En pratique, une extrudeuse (6) permet de fabriquer en continu une nappe (5) de gomme de 1600 mm de large par exemple.

L'installation (1) comprend un module de refroidissement (7) installé en sortie de l'extrudeuse (6). Le module de refroidissement (7) comprend des rouleaux (7a) de transitique et de refroidissement pour faire défiler et refroidir la nappe (5) directement issue de l'extrudeuse (6).

L'installation (1) comprend un module (8) dit de complexage, disposé à la sortie du module de refroidissement (7). Ainsi, en sortie du module de refroidissement (7), la nappe (5) est déposée sur un film support (9), tel que par exemple un film de textile ou un film plastique, lui-même déroulé en continu. Le film support (9) est de tout type approprié et doit pouvoir être découpé en bandelettes. Le module de complexage (8) comprend deux rouleaux (8a) de dévidage du film support (9). Les deux rouleaux de dévidage (8a) sont déroulés, l'un après l'autre, pour venir sous la nappe (5) et former un complexe (10) avec celle-ci. Le film support (9) supporte la nappe (5) et sera enroulé ultérieurement en galettes. Le module de complexage (8) comprend un système de raboutage (11), bien connu de l'état de la technique, permettant de solidariser, par exemple par collage, l'extrémité finale du premier rouleau (8a) de dévidage, avec l'extrémité initiale du deuxième rouleau (8a). Ainsi, lorsque le dévidage du premier rouleau (8a) est terminé, le dévidage du deuxième rouleau (8a) est poursuivi automatiquement, en lieu et place du premier rouleau (8a). Le premier rouleau (8a) peut alors être remplacé, soit manuellement par un opérateur, soit de manière automatique par un robot.

En sortie du module de complexage (8), le complexe (10) défile dans un accumulateur (12), connu de l'état de la technique, qui, au moyen de différents rouleaux de transitique (12a) mobiles et disposés à la manière d'un accordéon, permet d'allonger la distance parcourue par le complexe (10) à l'intérieur de l'accumulateur (12). En d'autres termes, le complexe (10) en défilement peut s'accumuler à l'intérieur de l'accumulateur (12), tout en stoppant son défilement en aval de l'accumulateur (12).

Afin de faire défiler le complexe (10), l'installation (1) comprend, de manière connue de l'Homme du métier, différents rouleaux d'entraînement motorisés positionnés pour tirer le film support (9) afin de ne pas détériorer la nappe (5) ou les bandelettes (2) de gomme. Afin de contrôler en temps réel la vitesse sur le film support (9), avant de pénétrer dans le module de complexage (8), la nappe (5) forme une boucle (13) dite de régulation, en suspension dans l'air. Le contrôle de la hauteur de la boucle (13) permet de vérifier si la vitesse sur le film support (9) est trop faible ou trop importante. En effet, plus la boucle (13) est haute et de petite dimension, plus la vitesse sur le film support (9) est importante, et inversement. Le contrôle de cette hauteur peut être réalisé, soit par un opérateur, soit par l'agencement de capteurs, et permet de ralentir ou d'accélérer la vitesse de défilement du film support (9) par rapport à la nappe (5).

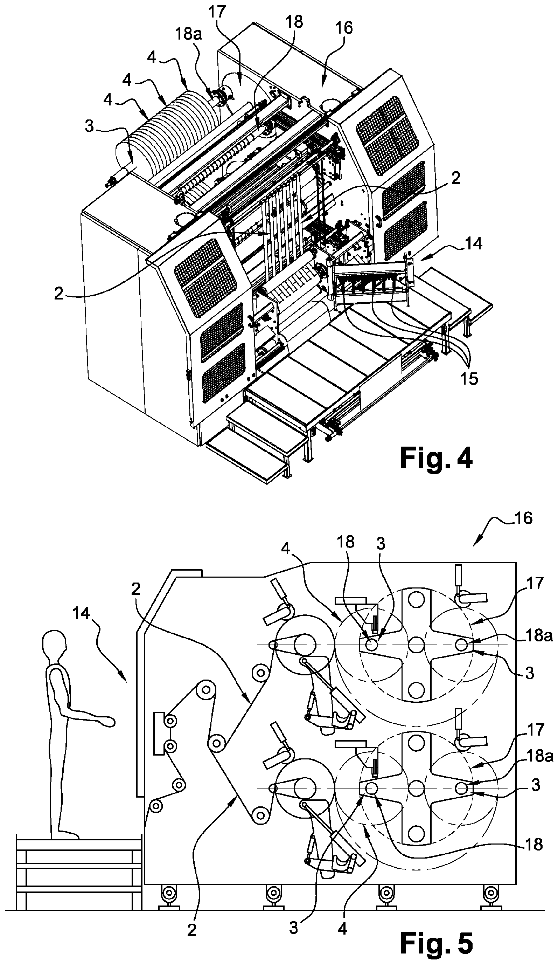

En référence à la figure 4, et En sortie de l'accumulateur (12), le complexe (10) est dirigé vers un module de découpe (14) comprenant une pluralité de lames de coupe (15) disposées pour découper longitudinalement le complexe (10) dans sa largeur afin de former une pluralité de bandelettes (2). Le module de découpe est monté pivotant pour venir se rabattre contre la nappe (5) et réaliser les opérations de découpe. Le module de découpe (14) est illustré en position ouverte sur les figures 1, 3 et 4, et en position fermée sur la figure 5. Le module de découpe (14) est bien connu de l'état la technique et ne sera pas décrit plus en détail.

En référence aux figures 3 à 5, en sortie du module de découpe (14), les bandelettes (2) de complexe (10) sont acheminées vers un module d'enroulage (16) pour enrouler chaque bandelette (2) autour d'un support (3) et former des galettes (4). À cet effet, le module d'enroulage (16) comprend deux flasques (17) entre lesquels deux barres (18, 18a) parallèles et opposées sont reçues, chacune de manière rotative et amovible. En pratique, des moteurs permettent d'entraîner en rotation les barres (18, 18a).

Chaque barre (18, 18a) reçoit une pluralité de supports (3) vides destinés à être reliés aux bandelettes (2) pour l'enroulage et la formation des galettes (4). Les supports (3) sont par exemple emmanchés fixement autour des barres (18, 18a).

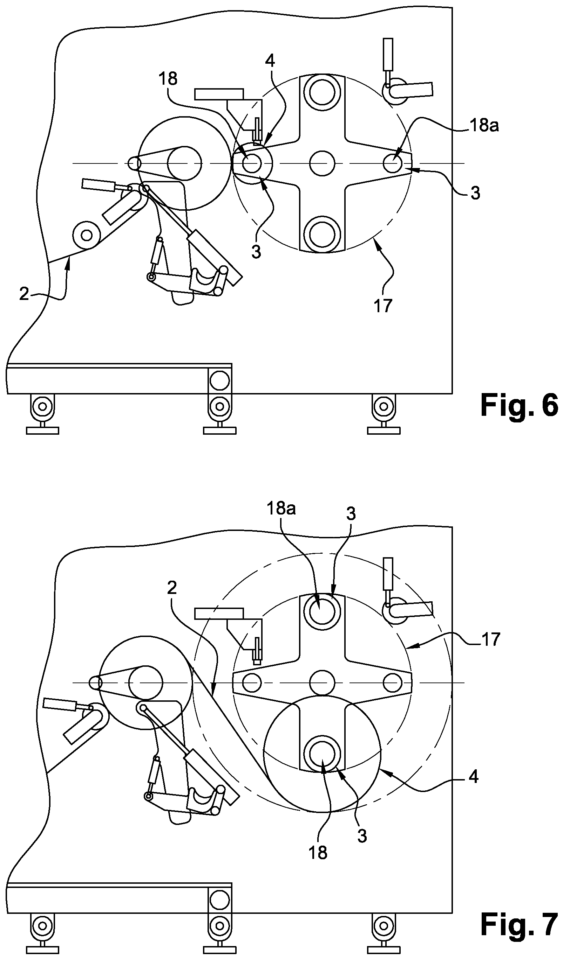

En pratique, et en référence à la figure 6, les supports (3) de l'une des barres (18) sont rattachés à l'extrémité libre des bandelettes (2) et sont entraînés en rotation, à une vitesse initiale, par l'intermédiaire de la barre (18) qui les supporte. De cette manière, l'enroulage des bandelettes (2) autour des supports (3) permet de former des galettes (4).

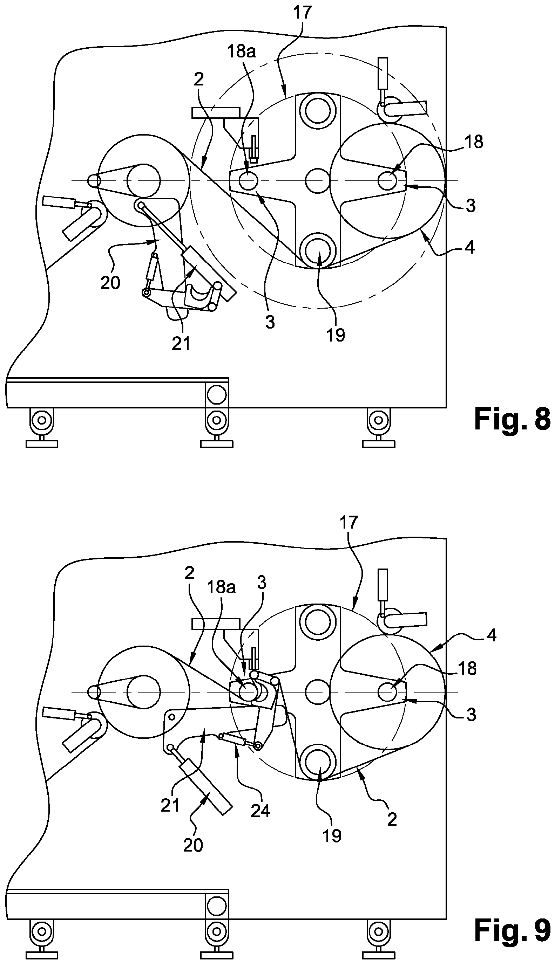

En référence aux figures 7 et 8, lorsque les galettes (4) sont pratiquement formées, c'est-à-dire qu'elles ont atteint un diamètre souhaité, les deux flasques (17) du module d'enroulage (16) sont entraînés en rotation pour faire pivoter les deux barres (18, 18a), et notamment pour venir mettre les supports (3) vides de la deuxième barre (18a) en contact avec les bandelettes (2), en amont des galettes (4) pratiquement formées. Des rouleaux déflecteurs (19) sont utilisés pour dévier le chemin des bandelettes (2) et ne pas gêner le pivotement des barres (18, 18a).

À ce stade du procédé, l'enroulage et le défilement des bandelettes (2) sont stoppés, et l'accumulateur (12) est actionné afin que le complexe (10) en provenance de l'extrudeuse (6) s'y accumule. De cette manière, l'extrudeuse (6) reste en fonctionnement et la fabrication de la nappe (5) est toujours continue. En pratique, l'accumulateur (12) permet d'accumuler le complexe (10) pendant environ 1 min par exemple, c'est-à-dire qu'il peut accumuler environ 50 m de complexe (10).

Pendant que le complexe (10) s'accumule dans l'accumulateur (12), et en référence aux figures 9 à 13, le module d'enroulage (16) réalise une découpe transversale des bandelettes (2) en amont des galettes (4), approvisionne des supports vides (3) et rattache automatiquement l'extrémité libre des bandelettes (2) auxdits supports vides (3) et, simultanément, termine l'enroulage de l'extrémité libre des bandelettes (2) découpées autour des galettes (4), évacue automatiquement les galettes (4) formées, et redémarre l'enroulage de chacune des bandelettes (2) autour des supports (3) vides à une vitesse supérieure à la vitesse initiale jusqu'à décharger complètement l'accumulateur (12), puis reprend l'enroulage à la vitesse initiale.

A cet effet, et en référence aux figures 9, à 11, le module d'enroulage (16) comprend un bras (20), assujetti à un vérin (21), et monté pivotant pour venir, par l'intermédiaire d'un organe d'appui (22), prendre appui contre une face inférieure de chacune des bandelettes (2), entre les supports (3) vides et les galettes (4) pratiquement formées. En pratique, l'organe d'appui (22) est lui-même articulé par rapport au bras (20) et par l'intermédiaire d'un vérin (24) pour venir en position d'appui. Le déplacement de cet organe d'appui (22) permet donc de créer une surface d'appui permettant à une lame de coupe (23) d'être déplacée pour venir en contre appui découper transversalement l'ensemble des bandelettes (2).

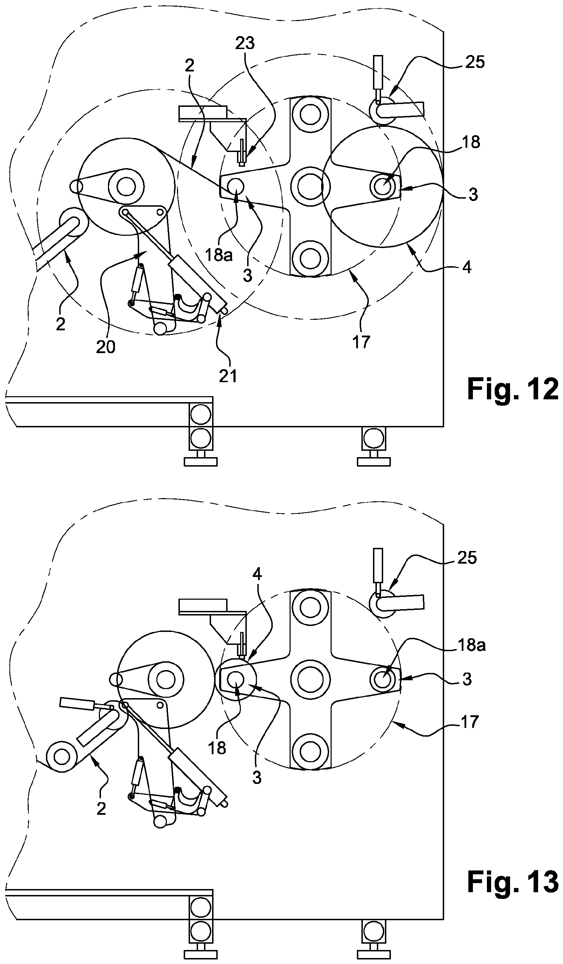

En référence à la figure 12, lorsque les bandelettes (2) sont découpées, la barre (18) qui supporte les galettes (4) pratiquement formées, est entraînée en rotation pour finir l'enroulage de l'extrémité des bandelettes (2) autour desdites galettes (4), en combinaison avec un rouleau d'appui (25) qui permet de plaquer l'extrémité libre desdites bandelettes (2) sur les galettes (4).

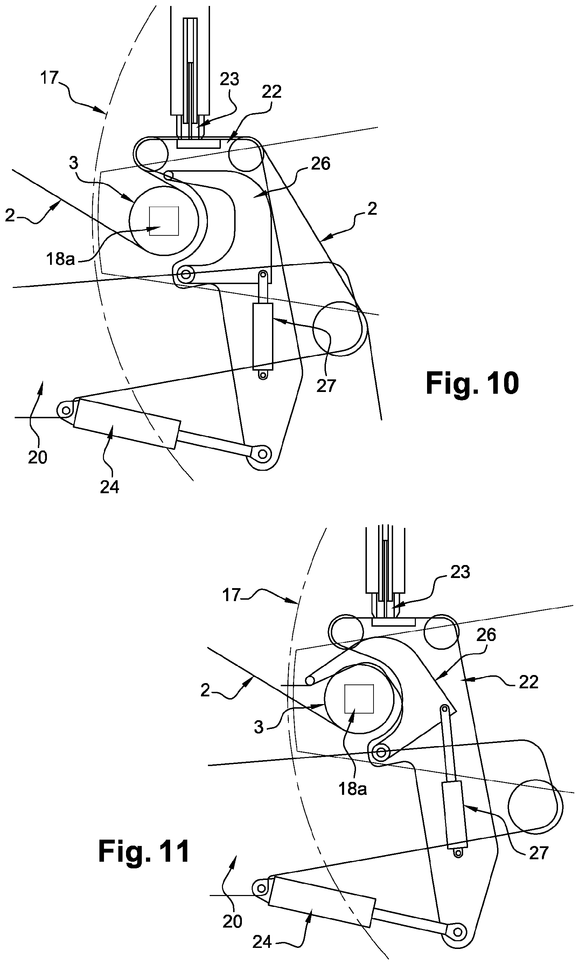

En référence aux figures 10 et 11, l'organe d'appui (22) comprend en outre une pièce d'extrémité (26) en forme de C, montée pivotante par l'intermédiaire d'un vérin (27) fixé sur l'organe d'appui (22), et destinée à venir coiffer les supports (3) vides. En référence à la figure 11, lorsque les bandelettes (2) sont coupées transversalement, la pièce d'extrémité (26) en forme de C qui coiffe les supports (3) vides, est pivotée pour ramener l'extrémité coupée des bandelettes (2) en contact contre les supports (3) vides, afin de favoriser le rattachement des bandelettes (2) autour des supports (3) vides et l'enroulage ultérieur. En référence aux figures 12 et 132, la barre (18a) qui supporte lesdits supports (3) vides est entraînée en rotation pour démarrer l'enroulage en tant que tel pour la formation de nouvelles galettes (4).

L'enroulage des bandelettes (2) autour des nouveaux supports (3) est réalisé à une vitesse supérieure à la vitesse initiale, pour décharger complètement l'accumulateur (12) du complexe (10) qui s'y était accumulé. Lorsque l'accumulateur (12) déchargé, l'enroulage des bandelettes (2) est repris à la vitesse initiale. En parallèle, en référence à la figure 13, la barre (18) qui reçoit les galettes (4) formées, a été évacuée et remplacée par une nouvelle barre (18a) avec des supports (3) vides, notamment de manière automatique par un robot.

En pratique, l'installation (1) comprend des capteurs qui détectent que les galettes (4) sont formées, c'est-à-dire qu'elles ont atteint le diamètre désiré. Ces capteurs sont assujettis à la rotation des flasques (17), et à la rotation des barres (18, 18a) recevant les supports (3). La vitesse de rotation des barres (18, 18a) est également assujettie à l'accumulateur (12) de sorte que lorsque la rotation des supports (3) est arrêtée ou ralentie, le complexe (10) s'accumule automatiquement dans l'accumulateur (12) et, lorsque l'enroulage des nouvelles galettes (4) débute, la vitesse de rotation de la barre (18a) correspondante est accélérée pour décharger l'accumulateur (12) du complexe (10) accumulé, puis est ralentie jusqu'à la vitesse initiale.

L'installation (1) permet donc d'enrouler automatiquement des bandelettes (2) autour de supports (3), pour former des galettes (4), en continu. L'extrudeuse (6) ne nécessite aucun arrêt. L'évacuation des galettes (4) formées est automatique, ainsi que l'approvisionnement de supports (3) vides. Il en est de même pour l'opération de découpe des bandelettes (2) pour libérer les galettes (4), et pour l'opération qui consiste à rattacher l'extrémité libre des bandelettes (2) découpées aux supports (3) vides.

Le module d'enroulage (16) comprend avantageusement plusieurs jeux de flasques (17) et de barres (18, 18a) parallèles, pour former simultanément plusieurs séries de galettes (4).

## Revendications

1. Procédé d'enroulage en continu de bandelettes (2) de gomme, notamment utilisées dans la fabrication d'un pneumatique, pour former des galettes (4), à partir d'une nappe (5) de gomme extraite en continu d'une extrudeuse (6), le procédé comprenant des étapes consistant à :
- faire défiler en continu et refroidir la nappe (5) en sortie de l'extrudeuse (6) par l'intermédiaire de rouleaux (7a) de transitique et de refroidissement ;
- déposer en continu la nappe (5) refroidie sur un film support (9) déroulé en continu pour former un complexe (10) ;
- faire défiler le complexe (10) dans un accumulateur (12) ;
***caractérisé* en ce qu'**il comprend des étapes consistant successivement à :
- en sortie de l'accumulateur (12), découper le complexe (10) dans sa largeur en une pluralité de bandelettes (2) ;
- enrouler les bandelettes (2) à une vitesse initiale, chacune autour d'un support (3) pour former des galettes (4) ;
- lorsque les galettes (4) sont terminées, stopper l'enroulage des bandelettes (2) et faire s'accumuler dans l'accumulateur (12) le complexe (10) en provenance de l'extrudeuse (6) ;
- pendant que le complexe (10) s'accumule, approvisionner des supports (3) vides, découper transversalement les bandelettes (2) en amont des galettes (4) et rattacher l'extrémité libre des bandelettes (2) auxdits supports (3) vides ;
- simultanément, finir l'enroulage de l'extrémité libre des bandelettes (2) autour des galettes (4), évacuer automatiquement lesdites galettes, et redémarrer l'enroulage de chacune des bandelettes (2) autour des supports (3) vides à une vitesse supérieure à la vitesse initiale jusqu'à décharger complètement l'accumulateur (12), puis reprendre l'enroulage à la vitesse initiale.

2. Procédé selon la revendication 1, ***caractérisé* en ce qu'**il comprend une étape consistant à laisser la nappe (5) former une boucle (13) entre le dépôt de la nappe (5) sur le film support (9) et le refroidissement de la nappe (5).

3. Procédé selon la revendication 1, ***caractérisé* en ce que** les galettes (4) sont évacuées et remplacées par des supports (3) vides, automatiquement et par l'intermédiaire d'un robot.

4. Procédé selon la revendication 1, ***caractérisé* en ce que** lorsque les galettes (4) sont terminées, des supports (3) vides sont déplacés pour venir en contact avec les bandelettes (2) en amont des galettes (4) de manière à démarrer l'enroulement des bandelettes (2) autour desdits supports (3) vides, un organe d'appui (22) est ensuite déplacé pour venir en appui contre les bandelettes (2) entre les galettes (4) et les supports (3) vides, et une lame de coupe (23) est déplacée pour couper transversalement les bandelettes (2), en contre-appui de l'organe d'appui (22), les supports (3) vides sont entrainés en rotation pour l'enroulage des bandelettes (2) et la formation de nouvelles galettes (4).

5. Installation (1) d'enroulage en continu de bandelettes (2) de gomme, notamment utilisées dans la fabrication d'un pneumatique, pour former des galettes (4), à partir d'une nappe (5) de gomme extraite en continu d'une extrudeuse (6), l'installation (1) comprenant successivement :
- un module de refroidissement (7) comportant des rouleaux (7a) de transitique et de refroidissement pour faire défiler et refroidir la nappe (5) en sortie d'extrudeuse (6) ;
- un module de complexage (8) comprenant un rouleau (8a) de dévidage d'un film support (9) sous la nappe (5) refroidie pour former un complexe (10) ;
- un accumulateur (12) au travers duquel le complexe (10) est destiné à défiler en continu en sortie du module de complexage (8) ;
l'installation est **caractérisée en ce qu'**elle comprend en outre et successivement:
- un module de découpe (14) comprenant des lames de coupe (15) du complexe (10) dans sa largeur et en une pluralité de bandelettes (2) ;
- un module d'enroulage (16) des bandelettes (2) comprenant :
• une pluralité de supports (3) entrainés en rotation et autour desquels les bandelettes (2) sont enroulées pour former les galettes (4) ;
• des capteurs détectant que les galettes (4) sont formées, assujettis à des moyens d'évacuation des galettes (4) formées ;
• une lame de coupe (23) transversale des bandelettes (2) en amont des galettes (4) formées ;
• des moyens d'approvisionnement automatique de supports (3) vides et d'enroulage des bandelettes (2) découpées autour desdits supports (3) vides ;
***et en ce que*** l'installation comprend des moyens pour assujettir la vitesse de rotation des supports (3) pour l'enroulage des bandelettes (2) à l'accumulateur (12) de sorte que lorsque la rotation des supports (3) est arrêtée ou ralentie, le complexe (10) s'accumule dans l'accumulateur (12), et lorsque l'enroulage des nouvelles galettes (4) débute, la vitesse de rotation est accélérée pour décharger l'accumulateur (12) du complexe (10) accumulé, puis est ralentie jusqu'à une vitesse initiale.

6. Installation (1) selon la revendication 5, ***caractérisée* en ce que** les moyens d'approvisionnement automatique de supports (3) vides et d'enroulage des bandelettes (2) découpées autour desdits supports (3) vides comprennent deux flasques (17) entre lesquels deux barres (18, 18a) parallèles sont reçues de manière rotative et amovible, dont une première barre (18) sur laquelle s'enroulent des bandelettes (2), et une deuxième barre (18a) recevant des supports (3) vides, les flasques (17) étant aptes à être entraînés en rotation pour faire basculer la deuxième barre (18a) dans une position dans laquelle les supports (3) vides sont en contact avec les bandelettes (2) pour l'enroulage.

7. Installation (1) selon la revendication 6, ***caractérisée* en ce que** le module d'enroulage (16) comprend un organe d'appui (22) monté pivotant pour venir en appui contre les bandelettes (2) entre les galettes (4) et les supports (3) vides, et une lame de coupe transversale (23) déplaçable pour venir couper les bandelettes (2) en appui contre l'organe d'appui (22).

8. Installation (1) selon la revendication 5, ***caractérisée* en ce que** le module de complexage (8) comprend deux rouleaux (8a) de dévidage d'un film support (9), et un système de raboutage (11) de l'extrémité finale d'un rouleau (8a) avec l'extrémité initiale de l'autre rouleau (8a).

## Patentansprüche

1. Verfahren zum kontinuierlichen Aufrollen von Gummistreifen (2) insbesondere verwendet bei der Herstellung von Reifen, um Bandrollen (4) zu formen, ausgehend von einer kontinuierlich aus einem Extruder (6) extrahierten Gummibahn (5), wobei das Verfahren nacheinander umfasst:
- die Bahn (5) am Ausgang des Extruders (6) über Transport- und Kühlrollen (7a) kontinuierlich durchlaufen zu lassen und zu kühlen;
- die gekühlte Bahn (5) kontinuierlich auf eine Trägerfolie (9), die kontinuierlich abgewickelt wird, aufzulegen, um einen Komplex (10) zu bilden;
- den Komplex (10) durch einen Akkumulator (12) laufen zu lassen;
***dadurch gekennzeichnet, dass*** es nacheinander die folgenden Schritte umfasst:
- am Ausgang des Akkumulator (12) den Komplex (10) in seiner Breite in mehrere Streifen (2) zu schneiden;
- die Streifen (2) mit einer Ausgangsgeschwindigkeit jeweils um einen Halter (3) zu wickeln, um Bandrollen (4) zu bilden;
- wenn die Bandrollen (4) fertig sind, das Aufwickeln der Streifen (2) zu stoppen und im Akkumulator (12) den Komplex (10) aus dem Extruder (6) ansammeln zu lassen;
- während der Komplex (10) sich ansammelt, leere Halter (3) bereitzustellen, Streifen (2) vor den Bandrollen (4) in Querrichtung abzu schneiden und das freie Endstück der Streifen (2) an diesen leeren Haltern (3) zu befestigen;
- gleichzeitig Aufrollen des freien Endstücks der Streifen (2) um die Bandrollen (4) zu beenden, automatisch diese Bandrollen zu entfernen und das Aufrollen jedes Streifens (2) um leere Halter (3) mit einer höheren Gescchwindigkeit als die Augsgangsgeschwindigkeit neu zu starten, bis der Akkumulator (12) vollständig geleert ist, dann das Aufwickeln mit der Ausgangsgeschwindigkeit neu zu starten.

2. Verfahren nach Anspruch 1, ***dadurch gekennzeichnet, dass*** es einen Schritt umfasst, in dem die Bahn (5) eine Schleife (13) bilden kann, zwischen dem Auflegen der Bahn (5) auf der Trägerfolie (9) und dem Kühlen der Bahn (5).

3. Verfahren nach Anspruch 1, ***dadurch gekennzeichnet, dass*** die Bandrollen (4) automatisch und mittels eines Roboters entfernt und durch leere Halter (3) ersetzt werden.

4. Verfahren nach Anspruch 1, ***dadurch gekennzeichnet, dass*** sobald die Bandrollen (4) fertiggestellt sind, die leeren Halter (3) verschoben werden, um in Kontakt zu den Streifen (2) vor den Bandrollen (4) zu kommen, so dass das Aufrollen der Streifen (2) um diese leeren Halter (3) starten kann, eine Andrückvorrichtung (22) wird dann verschoben und drückt gegen die Streifen (2) zwischen den Bandrollen (4) und den leeren Haltern (3) und eine Schneidklinge (23) wird verschoben um die Streifen (2), in Gegenwirkung zur Andrückvorrichtung (22) quer abzuschneiden, die leeren Halter (3) werden wieder in Drehung versetzt, zum Aufrollen der Streifen (2) und der Bildung neuer Bandrollen (4).

5. Anlage (1) zum kontinuierlichen Aufrollen von Gummistreifen (2) insbesondere verwendet bei der Herstellung von Reifen, um Bandrollen (4) zu formen, ausgehend von einer kontinuierlich aus einem Extruder (6) extrahierten Gummibahn (5), die Anlage (1) umfasst nacheinander:
- ein Kühlmodul (7) mit Transport- und Kühlrollen (7a) um die Bahn (5) am Ausgang des Extruders (6) über Transport- und Kühlrollen (7a) kontinuierlich durchlaufen zu lassen und zu kühlen;
- ein Kaschiermodul (8) mit einer Abwickelrolle (8a) für eine Trägerfolie (9) unter der gekühlten Bahn (5), um einen Komplex (10) zu bilden;
- ein Akkumulator (12) durch den der Komplex (10) kontinuierlich durchläuft, am Ausgang des Kaschiermoduls (8);
Die Anlage ist **dadurch gekennzeichnet, dass** sie außerdem und nacheinander enthält:
- ein Schneidmodul (14) mit Schneidklingen (15) für den Komplex (10) um ihn in seiner Breite in mehrere Streifen (2) zu schneiden;
- ein Aufrollmodul (16) der Streifen (2) mit:
• mehreren Haltern (3) in Rotation angetrieben, um die die Streifen (2) gewickelt werden, um die Bandrollen (4) zu bilden;
• Sensoren, die erkennen, dass die Bandrollen (4) fertiggestellt sind, die von Entfernvorrichtungen für die fertiggestellten Bandrollen (4) abhängen;
• eine Schneidklinge (23) in Querrichtung der Streifen (2) vor den fertiggestellten Bandrollen (4);
• Mittel zur automatischen Versorgung der leeren Halter (3) und zum Aufrollen der Streifen (2), die um diese leeren Halter (3) herum geschnitten werden;
***und dadurch dass*** die Anlage Vorrichtungen enthält, um die Rotationsgeschwindigkeit der Halter (3) zum Aufwickeln der Streifen (2) vom Akkumulator (12) abhängig zu machen, so dass, wenn die Rotation der Halter (3) angehalten oder verlangsamt wird, sich der Komplex (10) im Akkumulator (12) ansammelt und wenn das Aufwickeln der neuen, leeren Bandrollen (4) beginnt, die Rotationsgeschwindigkeit beschleunigt wird, um aus dem Akkumulator (12) den angesammelten Komplex (10) zu entfernen und dann bis zu einer Ausgangsgeschwindigkeit verlangsamt wird.

6. Anlage (1) nach Anspruch 5, ***dadurch gekennzeichnet, dass*** die automatischen Vorrichtungen zur Versorgung der leeren Halter (3) und zum Aufwickeln der um diese leeren Halter (3) geschnittenen Streifen (2) zwei Flansche (17) enthalten, zwischen denen zwei parallele Stangen (18, 18a) drehbar und abnehmbar aufgenommen werden, um eine erste dieser Stangen (18) wickeln sich dabei die Streifen (2) und eine zweite Stange (18a) nimmt die leeren Halter (3) auf, die Flansche (17) können in Drehung versetzt werden, damit die zweite Stange (18a) in eine Position kippt, in der die leeren Halter (3) zum Aufwickeln Kontakt zu den Streifen (2) haben.

7. Anlage (1) nach Anspruch 6, ***dadurch gekennzeichnet, dass*** das Aufrollmodul (16) eine Andrückvorrichtung (22) enthält, die kippbar montiert ist, um gegen die Streifen (2) zwischen den Bandrollen (4) und den leeren Haltern (3) zu drücken sowie eine Schneidklinge in Querrichtung (23), die verschiebbar ist, um die Streifen (2), die gegen die Andrückvorrichtung (22) gedrückt werden zu schneiden.

8. Anlage (1) nach Anspruch 5, ***dadurch gekennzeichnet, dass*** das Kaschiermodul (8) zwei Abwickelrollen (8a) einer Trägerfolie (9) enthält, sowie ein Verbindungssystem (11) des Endabschnitts einer Rolle (8a) mit dem Anfangsabschnitt der nächsten Rolle (8a).

## Claims

1. Method for continuously winding gum strips (2), in particular used to manufacture a tyre, to form discs (4), from a web (5) of gum extracted continuously from an extruder (6), the method comprising the steps of:
- continuously feeding out and cooling the web (5) from the outlet of the extruder (6) via handling and cooling rollers (7a);
- continuously depositing the cooled web (5) on a liner (9) that is continuously unwound to form a complex (10);
- feeding the complex (10) into an accumulator (12);
**characterised in that** it comprises steps successively consisting of;
- at the outlet of the accumulator (12), cutting the complex (10) along the width thereof into a plurality of strips (2);
- winding, at an initial speed, each of the strips (2) about a support element (3) to form discs (4);
- when the discs (4) are completed, stopping the winding of the strips (2) and allowing the complex (10) from the extruder (6) to collect in the accumulator (12);
- while the complex (10) is being collected, procuring empty support elements (3), cutting the strips (2) crosswise upstream of the discs (4) and connecting the free end of the strips (2) to said empty support elements (3);
- simultaneously completing the winding of the free end of the strips (2) about the discs (4), automatically removing said discs, and restarting the winding of each of the strips (2) about the empty support elements (3) at a faster speed than the initial speed until the accumulator (12) is fully unloaded, then resuming the winding at the initial speed.

2. Method according to claim 1, **characterised in that** it comprises a step of allowing the web (5) to form a loop (13) between the deposition of the web (5) on the liner (9) and the cooling of the web (5).

3. Method according to claim 1, **characterised in that** the discs (4) are automatically removed and replaced by empty support elements (3) by way of a robot.

4. Method according to claim 1, **characterised in that** when the discs (4) are complete, empty support elements (3) are displaced so as to come into contact with the strips (2) upstream of the discs (4) so as to start winding the strips (2) about said empty support elements (3), a bearing member (22) is then displaced so as to come to bear against the strips (2) between the discs (4) and the empty support elements (3), and a cutting blade (23) is displaced so as to cut the strips (2) crosswise, bearing in the opposite direction against the bearing member (22), and the empty support elements (3) are driven in rotation so as to wind the strips (2) and form new discs (4).

5. Facility (1) for continuously winding gum strips (2), in particular used to manufacture a tyre, to form discs (4), from a web (5) of gum extracted continuously from an extruder (6), the facility (1) successively comprising:
- a cooling module (7) including handling and cooling rollers (7a) for feeding out and cooling the web (5) from the outlet of the extruder (6);
- a complex-forming module (8) comprising a roller (8a) for passing a liner (9) beneath the cooled web (5) to form a complex (10);
- an accumulator (12) through which the complex (10) is intended to be continuously fed at the output of the complex-forming module (8);
the facility is **characterised in that** it further and successively comprises:
- a cutting module (14) comprising blades (15) for cutting the complex (10) along the width thereof and into a plurality of strips (2);
- a module (16) for winding the strips (2) comprising:
• a plurality of support elements (3) driven in rotation and about which the strips (2) are wound to form the discs (4);
• sensors detecting that the discs (4) are formed, controlled by means for removing the formed discs (4);
• a blade (23) for cutting the strips (2) crosswise upstream of the formed discs (4);
• means for automatically procuring empty support elements (3) and for winding cut strips (2) about said empty support elements (3);
and **in that** the facility comprises means for causing the rotational speed of the support elements (3) for winding the strips (2) to be controlled by the accumulator (12) such that when the rotation of the support elements (3) is stopped or slowed, the complex (10) collects in the accumulator (12), and when the winding of the new discs (4) is started, the rotational speed is accelerated so as to unload the accumulator (12) of the complex (10) collected therein, then is slowed to reach an initial speed.

6. Facility (1) according to claim 5, **characterised in that** the means for automatically procuring empty support elements (3) and for winding the cut strips (2) about said empty support elements (3) comprise two flanges (17) between which two parallel bars (18, 18a) are received such that they can rotate and be removed, including a first bar (18) on which strips (2) are wound, and a second bar (18a) receiving empty support elements (3), the flanges (17) being capable of being driven in rotation in order to cause the second bar (18a) to move into a position wherein the empty support elements (3) are in contact with the strips (2) for winding.

7. Facility (1) according to claim 6, **characterised in that** the winding module (16) comprises a bearing member (22) mounted such that it pivots so as to come to bear against the strips (2) between the discs (4) and the empty support elements (3), and a cross-cutting blade (23) capable of being displaced so as to cut the strips (2) bearing against the bearing member (22).

8. Facility (1) according to claim 5, **characterised in that** the complex-forming module (8) comprises two rollers (8a) for passing a liner (9), and a system (11) for the end-to-end assembly of the final end of a roller (8a) with the initial end of the other roller (8a).
